# EUROPÄISCHE PATENTANMELDUNG

(11) **EP 0 913 579 A1**
(43) Veröffentlichungstag der Anmeldung: **06.05.1999**
(21) Anmeldenummer: 98114531.1
(22) Anmeldetag: 03.08.1998
(51) Int. Cl.: F04B 53/14, F04B 1/053, B60T 8/40

(54) **Kolbenpumpe bzw. Bremsanlage mit Kolbenpumpe**

(30) Priorität: 30.10.1997 DE 19747937
(71) Anmelder: ROBERT BOSCH GMBH, 70442 Stuttgart (DE)
(72) Erfinder: Weh, Andreas, 87471 Durach (DE); Baur, Gerd, 87549 Rettenberg-Freidorf (DE)

(57) **Zusammenfassung**

Bei einer bekannten Kolbenpumpe einer Bremsanlage ist für jeden Bremskreis ein separater Pumpenkolben vorgesehen. Dies erfordert einen erheblichen Bauaufwand.

Bei der hier vorgeschlagenen Kolbenpumpe (10) einer Bremsanlage sind an dem Pumpenelement (10a) zwei Einlaßanschlüsse (21, 22) vorgesehen, so daß mit nur einem Pumpenelement (10a) die Drücke in zwei Bremszylindern getrennt voneinander steuerbar sind.

Die Kolbenpumpe ist insbesondere für schlupfgeregelte Fahrzeugbremsanlagen bei Kraftfahrzeugen vorgesehen.

## Beschreibung

### Stand der Technik

Die Erfindung geht aus von einer Kolbenpumpe nach der Gattung des Anspruchs 1 oder des Anspruchs 10 bzw. von einer Bremsanlage mit einer Kolbenpumpe nach der Gattung des Anspruchs 1 oder 10.

Die Kolbenpumpe ist insbesondere als Pumpe in einer Bremsanlage eines Fahrzeugs vorgesehen und wird beim Steuern des Drucks in Bremszylindern der Fahrzeugräder verwendet. Je nach Art der Bremsanlage werden für derartige Bremsanlagen die Kurzbereichnungen ABS bzw. ASR bzw. FDR bzw. EHB verwendet. In der Bremsanlage dient die Pumpe beispielsweise zum Rückfördern von Bremsflüssigkeit aus einem Bremszylinder oder aus mehreren Bremszylindern in einen Hauptbremszylinder (ABS) und/oder zum Fördern von Bremsflüssigkeit aus einem Vorratsbehälter in einen Bremszylinder oder in mehrere Bremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Bremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Bremszylinder bzw. in die Bremszylinder fördert, wenn ein elektrischer Bremspedalsensor eine Betätigung des Bremspedals erfaßt oder bei der die Pumpe zum Füllen eines Speichers der Bremsanlage dient.

Besonders wichtig ist es, daß bei der Bremsanlage in den einzelnen Bremszylindern der Druck unabhängig vom Druck in den anderen Bremszylindern gesteuert werden kann. Deshalb sind üblicherweise bei einem Fahrzeug mit vier Bremszylindern Kolbenpumpen vorgesehen, bei denen jedem der Bremszylinder jeweils ein Pumpenelement mit je einem Pumpenkolben zugeordnet ist. Daneben zeigt die US-Patentschrift 4,875,741 eine Bremsanlage, bei der an ein Pumpenelement zwei Bremszylinder angeschlossen sind. Damit jedoch bei dieser Lösung das Druckmedium nicht ungewollt aus einem der Bremszylinder in den jeweils anderen Bremszylinder überströmen kann, wird hier ein Pumpenelement mit zwei Arbeitsdruckräumen verwendet. Einer der beiden Arbeitsdruckräume befindet sich stirnseitig am Pumpenkolben und der jeweils andere Arbeitsdruckraum wird als Ringraum dadurch gebildet, daß der Pumpenkolben mit einer Stufe versehen ist. Auch bei der in der US-Patentschrift gezeigten Bremsanlage muß für jeden der Bremszylinder an der Kolbenpumpe je ein eingangsseitiges Rückschlagventil und je ein ausgangsseitiges Rückschlagventil vorgesehen sein.

Nachteilig bei den bekannten Ausführungen ist, daß für die Herstellung der Bremsanlage viele aufwendig herzustellende Einzelteile erforderlich sind und durch die Vielzahl der benötigten Einzelteile die Bremsanlage, insbesondere die Kolbenpumpe, relativ groß baut.

### Vorteile der Erfindung

Die erfindungsgemäße Kolbenpumpe mit den kennzeichnenden Merkmalen des Anspruchs 1 oder 10 bzw. die Bremsanlage nach Anspruch 16 hat demgegenüber den Vorteil, daß bei reduzierter Anzahl benötigter Bauteile eine einwandfreie Funktion gewährleistet ist. Insbesondere können bei einer Kolbenpumpe an einen Pumpenkolben zwei oder gegebenenfalls auch mehr als zwei Bremszylinder angeschlossen werden. Von Vorteil ist auch, daß weniger Rückschlagventile benötigt werden. Weil insgesamt weniger Bauteile benötigt werden, baut die vorgeschlagene Kolbenpumpe insgesamt auch kleiner und der Herstellungsaufwand ist geringer.

Durch die in den Unteransprüchen aufgeführten Maßnahmen sind vorteilhafte Weiterbildungen und Verbesserungen möglich.

Durch Integration mindestens eines der Rückschlagventile in den Pumpenkolben kann das Bauvolumen vorteilhafterweise zusätzlich deutlich reduziert werden. Und es wird dadurch der Aufwand für den Zusammenbau der Kolbenpumpe auf vorteilhafte Weise zusätzlich wesentlich geringer.

Wird die Kolbenpumpe so ausgeführt, daß eines der Rückschlagventile einen hülsenartigen Schließkörper hat, wobei innerhalb dieses hülsenartigen Schließkörpers der Schließkörper eines weiteren Rückschlagventils vorgesehen ist, so erhält man den Vorteil einer weiteren wesentlichen Reduzierung des erforderlichen Bauvolumens.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 eine Bremsanlage mit einer erfindungsgemäß ausgeführten Kolbenpumpe, die Figuren 2 und 3 ein erstes Ausführungsbeispiel mit unterschiedlicher Kolbenlage des Pumpenkolbens, die Figuren 4 und 5 ein zweites Ausführungsbeispiel mit auch hier unterschiedlicher Kolbenlage des Pumpenkolbens und die Figur 6 ein weiteres Ausführungsbeispiel.

### Beschreibung der Ausführungsbeispiele

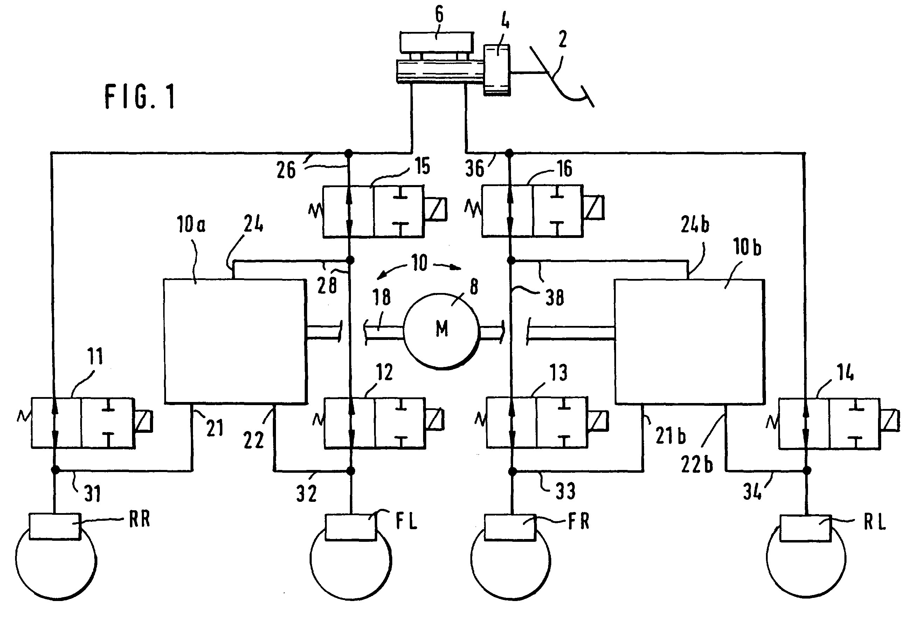

Die **Figur 1** zeigt beispielhaft in symbolhafter Form eine bevorzugt ausgewählte Fahrzeugbremsanlage eines Kraftfahrzeugs mit vier Rädern, wobei die beiden Vorderräder von einer nicht dargestellten Antriebsmaschine angetrieben werden können und die beiden Hinterräder können nicht angetrieben werden. Symbolhaft dargestellt sind ein rechtes Hinterrad mit einem durch ein Rechteck symbolisierten Bremszylinder RR, ein linkes Vorderrad mit einem Bremszylinder FL, ein rechtes Vorderrad mit einem Bremszylinder FR und ein linkes Hinterrad mit einem Bremszylinder RL. Desweiteren symbolhaft dargestellt sind ein Bremspedal 2, ein Hauptbremszylinder 4, ein ein Druckmedium, vorzugsweise Bremsflüssigkeit, enthaltender Vorratsbehälter 6, ein Elektromotor 8, eine Kolbenpumpe 10, ein erstes Sperrventil 11, ein zweites Sperrventil 12, ein drittes Sperrventil 13, ein viertes Sperrventil 14, ein fünftes Sperrventil 15 und ein sechstes Sperrventil 16. Die Sperrventile 11, 12, 13, 14, 15, 16 sind elektrisch steuerbar. Die zu den Sperrventilen 11, 12, 13, 14, 15, 16 und zum Elektromotor 8 führenden elektrischen Leitungen sind der besseren Übersichtlichkeit wegen in der Zeichnung nicht dargestellt. Die Kolbenpumpe 10 umfaßt ein erstes Pumpenelement 10a und ein zweites Pumpenelement 10b. Mit Hilfe eines in der Figur 1 durch einen Doppelstrich symbollisierten mechanischen Übertragungsmittels kann die vom Elektromotor 8 erzeugte Antriebsleistung auf die Pumpenelemente 10a, 10b übertragen werden, wobei beim ausgewählten Ausführungsbeispiel das mechanische Übertragungsmittel ein vom Elektromotor 8 rotierend antreibbarer Exzenter 18 ist.

Das erste Pumpenelement 10a hat einen ersten Einlaßanschluß 21, einen zweiten Einlaßanschluß 22 und einen Auslaßanschluß 24. Auch das zweite Pumpenelement 10b hat einen ersten Einlaßanschluß 21b, einen zweiten Einlaßanschluß 22b und einen Auslaßanschluß 24b. Somit hat die bevorzugt ausgewählte Kolbenpumpe 10 insgesamt vier Einlaßanschlüsse 21, 22, 21b, 22b und zwei Auslaßanschlüsse 24, 24b.

Eine Leitung 26 verbindet den Hauptbremszylinder 4 mit dem Sperrventil 11 und mit dem Sperrventil 15; eine Leitung 28 verbindet den Auslaßanschluß 24 mit den beiden Sperrventilen 12 und 15; eine Leitung 31 verbindet den ersten Einlaßanschluß 21 der Kolbenpumpe 10 mit dem Sperrventil 11 und mit dem Bremszylinder RR des rechten Hinterrads; eine Leitung 32 verbindet den zweiten Einlaßanschluß 22 der Kolbenpumpe 10 mit dem Sperrventil 12 und mit dem Bremszylinder FL des linken Vorderrades; eine Leitung 33 verbindet den Einlaßanschluß 21b mit dem Sperrventil 13 und mit dem Bremszylinder FR des rechten Vorderrades; eine Leitung 34 verbindet den Einlaßanschluß 22b mit dem Sperrventil 14 und mit dem Bremszylinder RL des linken Hinterrades; eine Leitung 36 verbindet den Hauptbremszylinder 4 mit dem Sperrventil 14 und mit dem Sperrventil 16; eine Leitung 38 verbindet den Auslaßanschluß 24b der Kolbenpumpe 10 mit dem Sperrventil 13 und mit dem Sperrventil 16. Die Leitungen 26, 28, 31, 32, 33, 34, 36, 38 sind Hydraulikrohre bzw. Hydraulikschläuche, die das Druckmedium, beispielsweise Bremsflüssigkeit, enthalten.

Über das Bremspedal 2 kann Bremsdruck in den Bremszylindern RR, FL, FR, RL aufgebaut werden. In Abweichung zum über das Bremspedal 2 vorgegebenen Bremsdruck, kann mit Hilfe der Kolbenpumpe 10 der Druck in den Bremszylindern RR, FL, FR, RL abgesenkt oder aufgebaut werden. Wenn beispielsweise das Bremspedal 2 zu stark betätigt wird, dann werden mit Hilfe einer nicht dargestellten Steuerung die Sperrventile 11, 12 ganz oder teilweise in ihre Sperrstellung steuert, und die Kolbenpumpe 10 fördert Druckmedium aus den Leitungen 31, 32, durch die Leitung 28 und durch das geöffnete Sperrventil 15 in den Vorratsbehälter 6. Dadurch sinkt der Druck in den Bremszylindern RR, FL. Durch mehr oder weniger weites Öffnen der Sperrventile 11 und/oder 12 kann dabei der Bremsdruck in jedem der Bremszylinder RR, FL unabhängig vom Bremsdruck im anderen Bremszylinder RR bzw. FL abgesenkt werden. Deshalb ist es wichtig, daß das Druckmedium nicht unkontrolliert aus einem der Bremszylinder RR, FL in den jeweils anderen Bremszylinder RR bzw. FL überströmen kann, auch nicht über die Leitungen 31 und 32.

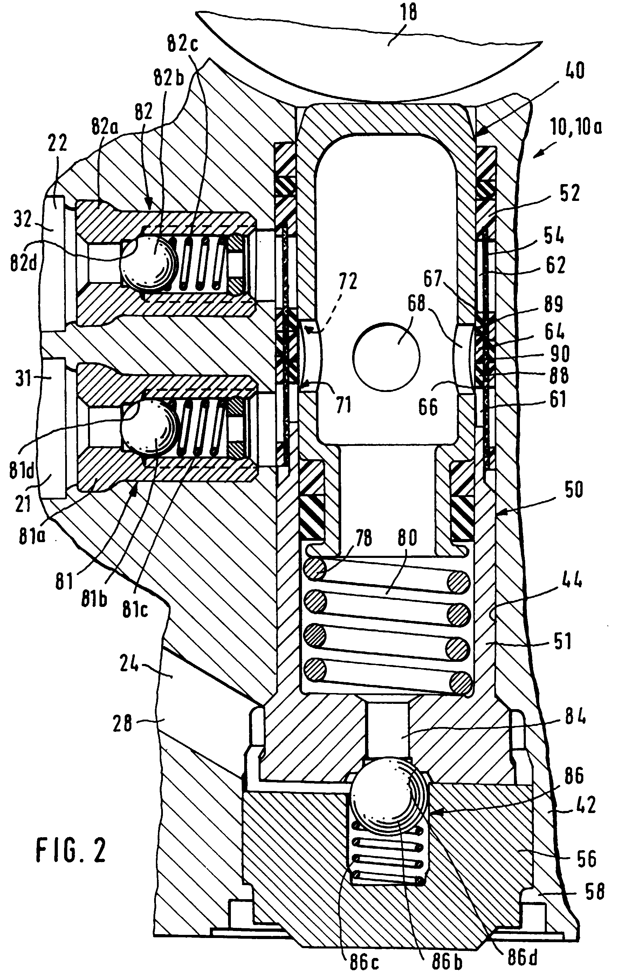

Soll bei nicht betätigtem Bremspedal 2 ein Bremsdruck im Bremszylinder FL des linken Vorderrades aufgebaut werden, dann steuert die nicht dargestellte Steuereinrichtung das Sperrventil 15 in die Sperrstellung und das Pumpenelement 10a der Kolbenpumpe 10 fördert Druckmedium aus dem Vorratsbehälter 6, durch die Leitung 26, durch das geöffnete Sperrventil 11, durch die Leitung 31, über den Einlaßanschluß 21, durch das Pumpenelement 10a, über den Auslaßanschluß 24, durch die Leitung 28 und durch das geöffnete Sperrventil 12 zum Bremszylinder FL des linken Vorderrats. Das Pumpenelement 10a fördert dabei Druckmedium auch aus der Leitung 32, über den Einlaßanschluß 22, über den Auslaßanschluß 24 und durch die Leitung 28 zurück in die Leitung 32, so daß dieser kurzgeschlossene Strömungsweg nicht zu einer Veränderung des Drucks führt. Damit dabei aus dem unter hohem Druck stehenden Bremszylinder FL des linken Vorderrads das Druckmedium nicht ungewollt in den unter niedrigem Druck stehenden Bremszylinder RR des rechten Hinterrads strömen kann, ist es wichtig, daß aus der Leitung 32 kein Druckmedium in die Leitung 31 strömen kann, auch nicht innerhalb des Pumpenelementes 10a. Wie dies bei einem Minimum an Bauaufwand sichergestellt werden kann, wird nachfolgend anhand der Figuren 2 bis 6 näher erläutert.

Die beispielhaft ausgewählte Kolbenpumpe 10 umfaßt das Pumpenelement 10a und das Pumpenelement 10b. Das Pumpenelement 10a ist an die Bremszylinder RR und FL angeschlossen. Entsprechend sind die Bremszylinder FR und RL an das Pumpenelement 10b angeschlossen. Das Pumpenelement 10b ist gleich gebaut wie das Pumpenelement 10a, weshalb sich die nachfolgenden Erläuterungen auf das Pumpenelement 10a beschränken können.

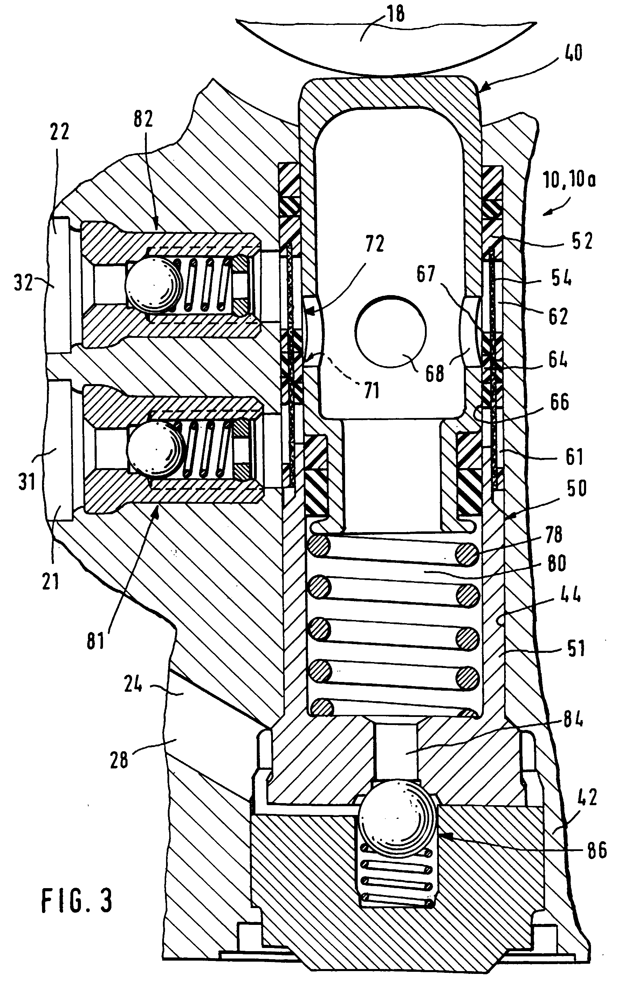

Die **Figuren 2 und 3** zeigen beispielhaft eine erste bevorzugt ausgewählte Ausführung des Pumpenelements 10a, wobei sich ein Pumpenkolben 40 des Pumpenelements 10a in der Figur 2 in eingefahrener Stellung befindet, und in der Figur 3 befindet sich der Pumpenkolben 40 in ausgefahrener Stellung.

In den Figuren 2 und 3 ist ein Ausschnitt eines als Gehäuse 42 dienenden Hydraulikblocks geschnitten dargestellt. In dem Hydraulikblock bzw. in dem Gehäuse 42 können beide Pumpenelemente 10a, 10b und die Sperrventile 11, 12, 13, 14, 15, 16 integriert sein.

In dem Gehäuse 42 gibt es eine Bohrung, die als Pumpenraum 44 dient. Im Pumpenraum 44 ist der Pumpenkolben 40 verschiebbar gelagert. Angetrieben wird der Pumpenkolben 40 vom Elektromotor 8 (Fig. 1) über den Exzenter 18.

Zwecks Verbesserung der Führung des Pumpenkolbens 40 und um den Zusammenbau der Kolbenpumpe 10 zu vereinfachen, ist in den Pumpenraum 44 eine Laufbuchse 50 eingesetzt. Beim dargestellten Ausführungsbeispiel besteht die Laufbuchse 50 aus einem ersten Laufbuchsenteil 51 und einem zweiten Laufbuchsenteil 52. Das erste Laufbuchsenteil 51 besteht aus Metall, wobei das erste Laufbuchsenteil 51 seine Form durch Kaltschlagen erhalten hat. Das zweite Laufbuchsenteil 52 ist ein Kunststoffteil, in das ein Filtersieb 54 eingespritzt ist. Die beiden Laufbuchsenteile 51, 52 können bereits vor ihrem Einbau in den Pumpenraum 44 durch Zusammenstecken fest miteinander verbunden werden. Ein Verschlußstopfen 56 verschließt den Pumpenraum 44 gegen die Umgebung. Der Verschlußstopfen 56 wird vor dem Einbau der Laufbuchse 50 in den Pumpenraum 44 mit der Laufbuchse 50 über eine Verstemmung verbunden. Eine am Gehäuse 42 vorgesehene weitere Verstemmung 58 hält den Verschlußstopfen 56 im Gehäuse 42. Am zweiten Laufbuchsenteil 52 der Laufbuchse 50 sind eine umlaufende erste Nut 61 und eine umlaufende zweite Nut 62 vorgesehen. Ein an der Laufbuchse 50 vorgesehener umlaufender Steg 64 trennt die beiden Nuten 61, 62 voneinander. Die erste Nut 61 kommuniziert mit dem ersten Einlaßanschluß 21, an dem die Leitung 31 angeschlossen ist. Die zweite Nut 62 kommuniziert mit dem zweiten Einlaßanschluß 22, an dem die Leitung 32 angeschlossen ist. An dem der Nut 61 zugewandten Ende des Stegs 64 gibt es eine umlaufende Steuerkante 66. An seinem der zweiten Nut 62 zugewandten Ende hat der Steg 64 eine umlaufende Steuerkante 67.

Der Pumpenkolben 40 ist hohl und nach seinem vom Exzenter 18 abgewandten Ende hin offen. Eine Querbohrung 68 oder mehrere Querbohrungen 68 fuhren radial in das hohle Innere des Pumpenkolbens 40. Je nach Stellung des Pumpenkolbens 40 innerhalb der Laufbuchse 50 bzw. innerhalb des Pumpenraums 44 wird eine steuerbare erste Querschnittsfläche 71 oder eine steuerbare zweite Querschnittsfläche 72 freigegeben. Die steuerbare erste Querschnittsfläche 71 wird am feststehenden Bauteil begrenzt durch die Steuerkante 66 einerseits und am verschiebbaren Bauteil durch die Querbohrung 68 andererseits. Die steuerbare zweite Querschnittsfläche 72 wird am feststehenden Bauteil begrenzt durch die Steuerkante 67 einerseits und am verschiebbaren Bauteil durch die Querbohrung 68 andererseits. Die steuerbare erste Querschnittsfläche 71 ist in der Figur 2 offen und in der Figur 3 geschlossen dargestellt. Die Figur 2 zeigt die steuerbare zweite Querschnittsfläche 72 geschlossen, und die Figur 3 zeigt die steuerbare zweite Querschnittsfläche 72 offen.

Der erste Einlaßanschluß 21 führt über ein eingangsseitiges erstes Rückschlagventil 81 und durch die Nut 61 zur steuerbaren ersten Querschnittsfläche 71. Der zweite Einlaßanschluß 22 führt über ein eingangsseitiges zweites Rückschlagventil 82 und durch die Nut 62 zur steuerbaren zweiten Querschnittsfläche 72.

Bei seiner durch den Exzenter 18 bewirkten hin- und hergehenden Bewegung des Pumpenkolbens 40 vergrößert bzw. verkleinert sich ein Arbeitsdruckraum 80 im Gehäuse 42 innerhalb des Pumpenraums 44. Beim in den Figuren 2 und 3 dargestellten Ausführungsbeispiel wird der Arbeitsdruckraum 80 begrenzt von den Seitenwänden der Laufbuchse 50, vom stirnseitigen Boden der Laufbuchse 50 und vom hohl ausgeführten Pumpenkolben 40.

Eine Kolbenrückstellfeder 78 hält den Pumpenkolben 40 in ständiger Anlage am Exzenter 18. Das erste Rückschlagventil 81 in der Leitung 31 im Bereich des Einlaßanschlusses 21 besteht im wesentlichen aus einer Patrone 81a, einem Schließkörper 81b und einer Schließfeder 81c. Die Schließfeder 81c beaufschlagt den Schließkörper 81b gegen einen an der Patrone 81a vorgesehenen Ventilsitz 81d. Das zweite Rückschlagventil 82 ist gleich aufgebaut wie das erste Rückschlagventil 81, hat also ebenfalls eine Patrone 82a, einen Schließkörper 82b, eine Schließfeder 82c und einen Ventilsitz 82d.

Bei einem Einfahrhub, d. h. wenn der Exzenter 18 den Pumpenkolben 40 in die Laufbuchse 50 hineindrückt (Fig. 2, 3; Pumpenkolben 40 nach unten), dann verkleinert sich der Arbeitsdruckraum 80 und das Druckmedium wird aus dem Arbeitsdruckraum 80, durch einen Kanal 84, über ein ausgangsseitiges Rückschlagventil 86, durch den Auslaßanschluß 24 in die Leitung 28 gedrückt. Das ausgangsseitige Rückschlagventil 86 umfaßt einen Schließkörper 86b und eine Schließfeder 86c. Die Schließfeder 86c beaufschlagt den Schließkörper 86b gegen einen am Laufbuchsenboden der Laufbuchse 50 vorgesehenen Ventilsitz 86d.

Die Steuerkante 66 befindet sich an einem mit der Laufbuchse 50 fest verbundenen Ring 88, und die Steuerkante 67 befindet sich an einem mit der Laufbuchse 50 fest verbundenen Ring 89. Die Ringe 88, 89 sind im eingebauten Zustand über die Laufbuchse 50 mit dem Gehäuse 42 fest verbunden. Die Ringe 88, 89 bestehen aus einem reibungsarmen Kunststoff, vorzugsweise aus Teflon, und liegen umfangsmäßig am Pumpenkolben 40 an, damit das Druckmedium nicht entlang des Pumpenkolbens 40 aus der Nut 61 in die Nut 62 bzw. aus der Nut 62 in die Nut 61 strömen kann. Ein Dichtring 90 verhindert, daß das Druckmedium zwischen der Laufbuchse 50 und der im Gehäuse 42 vorgesehenen Bohrung aus der Nut 61 in die Nut 62 bzw. aus der Nut 62 in die Nut 61 strömen kann.

Ist der Pumpenkolben 40 weit eingefahren (Fig. 2), dann ist die steuerbare erste Querschnittsfläche 71 geöffnet und die steuerbare zweite Querschnittsfläche 72 ist geschlossen. Das Druckmedium kann während des Ausfahrhubs (Pumpenkolben 40 nach oben) zunächst aus dem ersten Einlaßanschluß 21, über das erste Rückschlagventil 81, durch die erste Querschnittsfläche 71, in den Arbeitsdruckraum 80 strömen. Während des Ausfahrhubs wird die erste Querschnittsfläche 71 zunehmend geschlossen. Vor dem anschließenden Öffnen der zweiten Querschnittsfläche 72 ist die erste Querschnittsfläche 71 vollständig geschlossen. Wenn der Pumpenkolben 40 weiter ausfährt, dann wird die zweite Querschnittsfläche 72 geöffnet und das Druckmedium strömt aus dem zweiten Einlaßanschluß 22, über das zweite Rückschlagventil 82, durch die steuerbare zweite Querschnittsfläche 72, in den sich während des Ausfahrhubs vergrößernden Arbeitsdruckraum 80. Dabei ist die Verbindung aus Richtung des ersten Einlaßanschlusses 21 abgesperrt.

Die Rückschlagventile 81, 82 sorgen dafür, daß während eines Einfahrhubs (Fig. 2, 3; Pumpenkolben 40 nach unten) das Druckmedium nicht in die Leitung 31 bzw. in die Leitung 32 zurückströmen kann. Während des Einfahrhubs wird das Druckmedium über das ausgangsseitige Rückschlagventil 86 zum Auslaßanschluß 24 gedrückt.

Je nach Erfordernis kann das Pumpenelement 10a bzw. die Kolbenpumpe 10 bedarfsgerecht auf die Bremsanlage abgestimmt werden. Es kann beispielsweise die Schließkraft der Schließfeder 81c vorteilhafterweise wesentlich stärker als die Schließkraft der Schließfeder 82c gewählt werden, so daß das aus der Leitung 31 in den Arbeitsdruckraum 80 strömende Druckmedium das Rückschlagventil 81 erst bei wesentlich höherem Druckabfall überwindet als das aus der Leitung 32 in den Arbeitsdruckraum 80 strömende Druckmedium. Es ist beispielsweise auch möglich, die maximale Fläche der steuerbaren zweiten Querschnittsfläche 72 wesentlich größer zu wählen als die maximale Fläche der steuerbaren ersten Querschnittsfläche 71, so daß aus der Leitung 32 wesentlich mehr Druckmedium in den Arbeitsdruckraum 80 hineinströmt als aus der Leitung 31.

Weil von den beiden steuerbaren Querschnittsflächen 71, 72 in jeder Stellung des Pumpenkolbens 40 mindestens eine der beiden Querschnittsflächen 71, 72 geschlossen ist, kann kein Druckmedium aus der Leitung 31 in die Leitung 32 bzw. aus der Leitung 32 in die Leitung 31 strömen, obwohl beide Leitungen 31, 32 an das Pumpenelement 10a mit nur dem einen Pumpenkolben 40 und mit nur dem einen gemeinsamen Arbeitsdruckraum 80 angeschlossen sind. Es sind keine zwei Pumpenkolben erforderlich und es müssen auch keine getrennten Arbeitsdruckräume vorgesehen sein. Ferner sei darauf hingewiesen, daß trotz der Möglichkeit zum getrennten Steuern des Bremsdrucks in den beiden Bremszylindern RR und FL das gemeinsame ausgangsseitige Rückschlagventil 86 genügt.

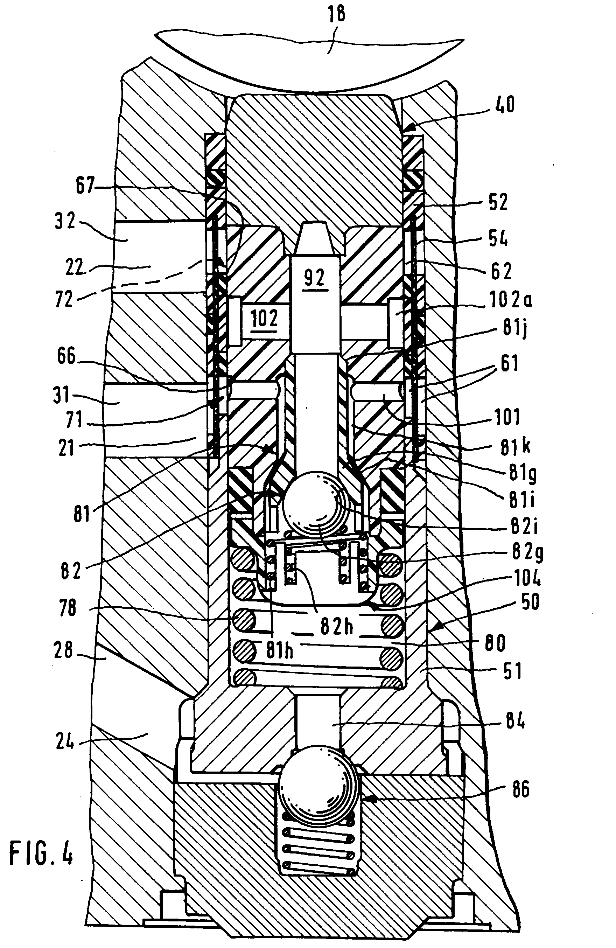

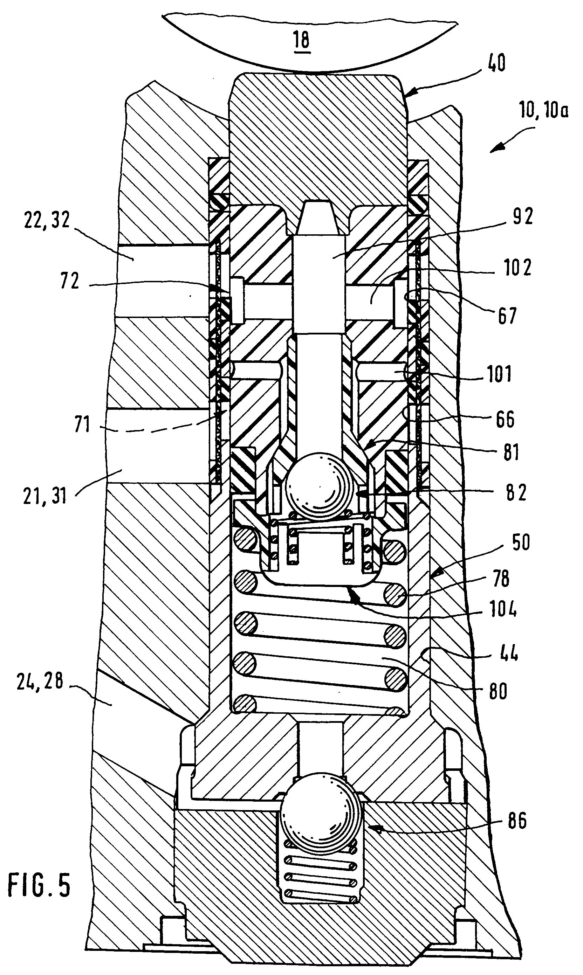

Bei der in den Figuren 2 und 3 dargestellten Ausführung des Pumpenelements 10a befinden sich, in Strömungsrichtung betrachtet, die beiden Rückschlagventile 81, 82 stromaufwärts vor den steuerbaren Querschnittsflächen 71, 72. Es ist aber auch möglich, in Strömungsrichtung betrachtet, die Rückschlagventile 81, 82 stromabwärts hinter den steuerbaren Querschnittsflächen 71, 72 anzuordnen, was nachfolgend anhand der beiden Figuren 4 und 5 erläutert wird. Dadurch ergibt sich die geschickte Möglichkeit, die Rückschlagventile 81, 82 im Pumpenkolben 40 anzuordnen, wodurch die Kolbenpumpe 10 insgesamt besonders wenig Bauraum erfordert.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die **Figuren 4 und 5** zeigen beispielhaft eine weitere, bevorzugt ausgewählte Ausführungsform des Pumpenelements 10a der Kolbenpumpe 10. Die Figur 4 zeigt das Pumpenelement 10a mit eingefahrenem Pumpenkolben 40, und die Figur 5 zeigt das Pumpenelement 10a mit ausgefahrenem Pumpenkolben 40.

Bei dem in den Figuren 4 und 5 dargestellten Ausführungsbeispiel hat der Pumpenkolben 40 eine nicht ganz bis zu dem dem Exzenter 18 zugewandten Ende reichende Längsbohrung 92. Die Längsbohrung 92 wird von einer ersten Querbohrung 101 und von einer zweiten Querbohrung 102 geschnitten. Die erste Querbohrung 101 ist so angeordnet, daß bei eingefahrenem Pumpenkolben (Fig. 4) die Querbohrung 101 mit der Nut 61 verbunden ist, so daß in dieser Stellung die steuerbare erste Querschnittsfläche 71 geöffnet ist. Andererseits ist bei ausgefahrenem Pumpenkolben 40 die steuerbare erste Querschnittsfläche 71 geschlossen (Fig. 5) und es besteht keine Verbindung zwischen dem Einlaßanschluß 21 und der Querbohrung 101. Die zweite Querbohrung 102 ist so angeordnet, daß bei eingefahrenem Pumpenkolben (Fig. 4) die steuerbare zweite Querschnittsfläche 72 geschlossen (Fig. 4) ist. Die steuerbare zweite Querschnittsfläche 72 ist nur dann geöffnet, wenn der Pumpenkolben 40 ausgefahren ist (Fig. 5). Der Abstand der beiden Steuerkanten 66, 67 ist so gewählt, daß während eines Ausfahrhubs zuerst die steuerbare erste Querschnittsfläche 71 geschlossen wird, bevor sich die steuerbare zweite Querschnittsfläche 72 öffnet. Während des Einfahrhubs wird zunächst die zweite Querschnittsfläche 72 geschlossen und dann erst die erste Querschnittsfläche 71 geöffnet. Damit die steuerbare zweite Querschnittsfläche 72 möglichst groß werden kann, ist am Umfang des Pumpenkolbens 40 eine umlaufende Nut 102a vorgesehen, in die die Querbohrung 102 mündet. Es ist möglich, am Umfang des Pumpenkolbens 40 eine weitere Nut vorzusehen, in die die Querbohrung 101 einmündet (nicht dargestellt). Auch bei der in den Figuren 2 und 3 gezeigten Ausführungsform kann am Außenumfang des Pumpenkolbens 40 eine umlaufende Nut (nicht dargestellt) vorgesehen sein, in die die Querbohrung 68 einmündet.

An dem dem Arbeitsdruckraum 80 zugewandten stirnseitigen Ende des Pumpenkolbens 40 gibt es eine Ventilkappe 104. Die Kolbenrückstellfeder 78 stützt sich an der Ventilkappe 104 ab und hält die Ventilkappe 104 ständig fest am Pumpenkolben 40; und über die Ventilkappe 104 hält die Kolbenrückstellfeder 78 den Pumpenkolben 40 in ständiger Anlage am Exzenter 18.

Beim in den Figuren 4 und 5 gezeigten Ausführungsbeispiel sind das eingangsseitige erste Rückschlagventil 81 und das eingangsseitige zweite Rückschlagventil 82 in den Pumpenkolben 40 integriert. Das erste Rückschlagventil 81 besteht im wesentlichen aus einem hülsenartigen Schließkörper 81g (Fig. 4, 5), einer Schließfeder 81h, einem ersten Ventilsitz 81i und einem zweiten Ventilsitz 81j. Der erste Ventilsitz 81i wird dadurch gebildet, daß der abgestuft ausgeführte Außenumfang des hülsenartigen Schließkörpers 81g innerhalb der Längsbohrung 92 an dem dem Arbeitsdruckraum 80 zugewandtem Ende des Pumpenkolbens 40 am Pumpenkolben 40 zur Anlage kommt. Der zweite Ventilsitz 81j wird dadurch gebildet, daß das dem Arbeitsdruckraum 80 abgewandte Ende des hülsenartigen Schließkörpers 81g an der abgestuft ausgeführten Längsbohrung 92 des Pumpenkolbens 40 zur Anlage kommt. Zwischen den beiden Ventilsitzen 81i und 81j wird ein den hülsenartigen Schließkörper 81g umgebender Zwischenraum 81k gebildet, in den die Querbohrung 101 einmündet. Die sich einerseits an der Ventilkappe 104 und andererseits am hülsenartigen Schließkörper 81g abstützende Schließfeder 81h sorgt dafür, daß in nicht betätigtem Ruhezustand das Rückschlagventil 81 im Bereich der beiden Ventilsitze 81i, 81j geschlossen ist. Weil der hülsenartige Schließkörper 81g und/oder der Pumpenkolben 40 im Bereich des Rückschlagventils 81 aus elastisch nachgebendem Kunststoff besteht, ist die Elastizität in Längsrichtung so groß, daß auch mit geringem Herstellungsaufwand erreicht werden kann, daß sowohl im Bereich des ersten Ventilsitzes 81i als auch im Bereich des zweiten Ventilsitzes 81j sicher abgedichtet wird.

Das eingangsseitige zweite Rückschlagventil 82 wird im wesentlichen gebildet von einem kugelförmigen Schließkörpers 82g, einer Schließfeder 82h und einem Ventilsitz 82i. Der Ventilsitz 82i des zweiten Rückschlagventils 82 befindet sich am sich in Richtung des Arbeitsdruckraums 80 trichterartig erweiternden Innenumfang des hülsenartigen Schließkörpers 81g des ersten Rückschlagventils 81. Die einerseits an der Ventilkappe 104 angreifende und andererseits am kugelförmigen Schließkörper 82g angreifende Schließfeder 82h beaufschlagt den Schließkörper 82g des eingangsseitigen zweiten Rückschlagventils 82 gegen den Ventilsitz 82i.

Während eines Einfahrhubs (Fig. 4, 5; Pumpenkolben 40 nach unten) drückt der in dem Arbeitsdruckraum 80 herrschende Druck, unterstützt durch die beiden Schließfedern 81h, 82h, den hülsenartigen Schließkörper 81g gegen den Ventilsitz 81i und den kugelförmigen Schließkörper 82g gegen den Ventilsitz 82i, so daß das Druckmedium nicht zu den Einlaßanschlüssen 21, 22 zurückströmen kann, sondern durch den Kanal 84, über das ausgangsseitige Rückschlagventil 86, durch den Auslaßanschluß 24, in die Leitung 28 gedrückt wird.

Während eines Ausfahrhubs (Fig. 4, 5; Bewegung des Pumpenkolbens 40 nach oben) entsteht eine Druckabsenkung im Arbeitsdruckraum 80 und das zuerst aus dem Einlaßanschluß 21 kommende Druckmedium drückt in Öffnungsrichtung auf den hülsenartigen Schließkörper 81g gegen die Schließfedern 81h, 82h, so daß das erste Rückschlagventil 81 öffnet, und das Druckmedium kann aus dem ersten Einlaßanschluß 21, durch die Nut 61, durch die steuerbare erste Querschnittsfläche 71, durch die Querbohrung 101, durch den Zwischenraum 81k, in den Arbeitsdruckraum 80 strömen. Bei Fortsetzung der Ausfahrbewegung des Pumpenkolbens 40 wird dann die zuerst offene steuerbare erste Querschnittsfläche 71 geschlossen und anschließend die steuerbare zweite Querschnittsfläche 72 geöffnet. Nun strömt das Druckmedium aus dem zweiten Einlaßanschluß 22, durch die Nut 62, durch die steuerbare zweite Querschnittsfläche 72, durch die Nut 102a, durch die Querbohrung 102, in die Längsbohrung 92. Der Druck des einströmenden Druckmediums drückt auf den kugelförmigen Schließkörper 82g gegen die Schließfeder 82h und gegen den abgesenkten Druck im Arbeitsdruckraum 80, so daß sich das zweite Rückschlagventil 82 öffnet, und das Druckmedium kann aus dem zweiten Einlaßanschluß 22 in den Arbeitsdruckraum 80 einströmen.

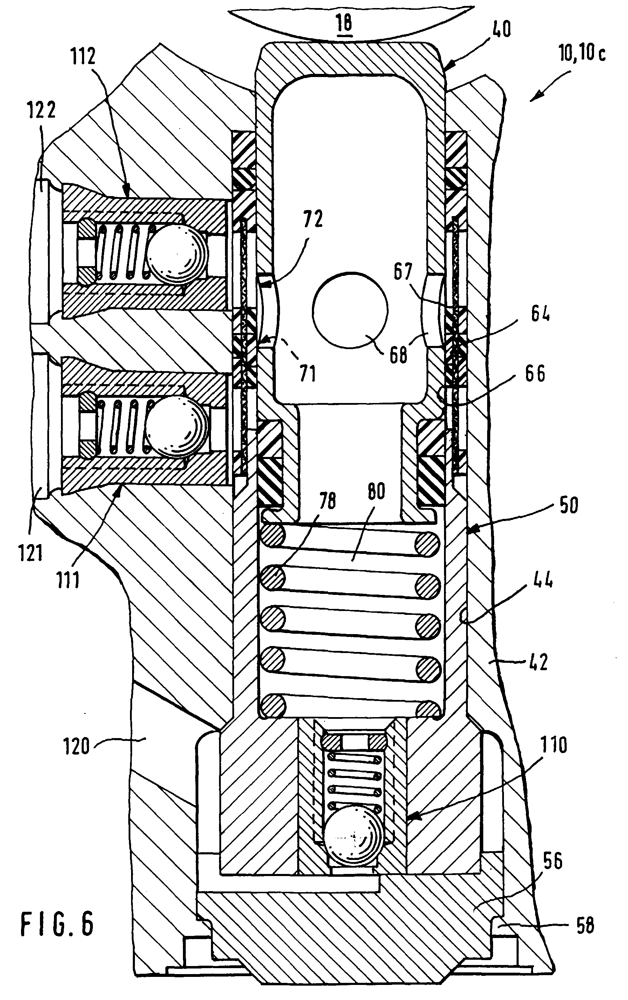

Die **Figur 6** zeigt ein weiteres Ausführungsbeispiel.

Im Unterschied zu den in den Figuren 2 bis 5 dargestellten Ausführungsbeispielen umfaßt die in der Figur 6 ausschnittsweise gezeigte Kolbenpumpe 10 ein abgewandelt ausgeführtes Pumpenelement 10c mit einem eingangsseitigen Rückschlagventil 110, einem ersten ausgangsseitigen Rückschlagventil 111 und einem zweiten ausgangsseitigen Rückschlagventil 112. Das Pumpenelement 10c hat einen Einlaßanschluß 120, einen ersten Auslaßanschluß 121 und einen zweiten Auslaßanschluß 122. Bildlich gesprochen, wird das Pumpenelement 10c im Vergleich zum Pumpenelement 10a umgekehrt durchströmt. Das Pumpenelement 10c kann im wesentlichen gleich gebaut sein wie die in den Figuren 2 bis 5 vorgestellten Ausführungen des Pumpenelements 10a, mit dem Unterschied, daß die eingangsseitigen und ausgangsseitigen Rückschlagventile umgekehrt durchströmbar ausgeführt sind.

Während eines Ausfahrhubs (Fig. 6, Pumpenkolben 40 nach oben) strömt das Druckmedium aus dem Einlaßanschluß 120, über das eingangsseitige Rückschlagventil 110, in den Arbeitsdruckraum 80. Während des Ausfahrhubs sind die beiden ausgangsseitigen Rückschlagventile 111, 112 geschlossen.

Während des Einfahrhubs (Fig. 6, Pumpenkolben 40 nach unten) ist das eingangsseitige Rückschlagventil 110 geschlossen. Zu Beginn des Einfahrhubs drückt der Pumpenkolben 40 das Druckmedium durch die steuerbare zweite Querschnittsfläche 72, über das ausgangsseitige zweite Rückschlagventil 112, in den zweiten Auslaßanschluß 122. Im Verlauf des Einfahrhubs wird die zuerst offene steuerbare zweite Querschnittsfläche 72 geschlossen und daran anschließend wird die steuerbare erste Querschnittsfläche 71 geöffnet, so daß gegen Ende des Einfahrhubs der Pumpenkolben 40 das Druckmedium aus dem Arbeitsdruckraum 80, durch die steuerbare erste Querschnittsfläche 71, über das ausgangsseitige erste Rückschlagventil 111, in den ersten Auslaßanschluß 121 drückt.

Bei der erfindungsgemäß ausgeführten Kolbenpumpe 10 können an das eine Pumpenelement 10a (Fig. 2, 3, 4, 5) mit dem einen einzigen Arbeitsdruckraum 80 und mit dem einen einzigen Pumpenkolben 40 zwei unabhängig voneinander steuerbare Einlaßanschlüsse 21, 22 angegeschlossen werden, ohne daß das Druckmedium aus einem der beiden Einlaßanschlüsse 21, 22 unbeabsichtigt in den jeweils anderen Einlaßanschluß 21 bzw. 22 strömen kann. Man kann das Pumpenelement auch so abwandeln, daß mehr als zwei Einlaßanschlüsse, beispielsweise drei Einlaßanschlüsse, vorgesehen sind (nicht dargestellt), und man kann die Steuerkanten beispielsweise so anordnen, daß in jeder Stellung des Pumpenkolbens jeweils nur einer der Einlaßanschlüsse mit dem Arbeitsdruckraum 80 verbunden ist. Entsprechendes gilt auch für die in der Figur 6 dargestellte Ausführung, bei der an dem Pumpenelement 10c mit nur einem Pumpenkolben 40 und einem Arbeitsdruckraum 80 mehrere, beispielsweise zwei oder drei, unabhängig voneinander steuerbare Auslaßanschlüsse 121, 121 vorgesehen werden können. Dabei ist beispielsweise in jeder Stellung des Pumpenkolbens 40 jeweils nur einer der Auslaßanschlüsse mit dem Arbeitsdruckraum 80 verbunden.

Bei der Kolbenpumpe 10 können, wie die Figur 1 zeigt, beispielsweise zwei Pumpenelemente 10a, 10b zusammengefaßt sein, so daß sich eine Bremsanlage ergibt, bei der mit nur zwei Pumpenelementen 10a, 10b und mit zusammen nur zwei Pumpenkolben 40 und zwei Arbeitsdruckräumen 80, eine Bremsanlage realisiert wird, bei der vier Druckkanäle, d. h. je ein Kanal für den rechten hinteren Bremszylinder RR, den linken vorderen Bremszylinder FL, den rechten vorderen Bremszylinder FR und den linken hinteren Bremszylinder RL, durch die Sperrventile 11, 12, 13, 14, 15, 16 unabhängig voneinander steuerbar sind.

## Patentansprüche

1. Kolbenpumpe, insbesondere für eine schlupfgeregelte Fahrzeugbremsanlage, mit einem in einem Pumpenraum eines Gehäuses über einen Kolbenhub zu einer hin- und hergehenden Bewegung antreibbaren Pumpenkolben, mit einem in den Pumpenraum führenden ersten Einlaßanschluß (21) und mit mindestens einem in den Pumpenraum führenden zweiten Einlaßanschluß (22) sowie mit mindestens einem aus dem Pumpenraum führenden Auslaßanschluß (24), dadurch gekennzeichnet, daß in einem Teilbereich des Kolbenhubs des Pumpenkolbens (40) der erste Einlaßanschluß (21) und in einem anderen Teilbereich des Kolbenhubs des Pumpenkolbens (40) der zweite Einlaßanschluß (22) abgesperrt ist.

2. Kolbenpumpe nach Anspruch 1, dadurch gekennzeichnet, daß über die gesamte Länge des Kolbenhubs jeweils mindestens eines der Einlaßanschlüsse (21, 22) abgesperrt ist.

3. Kolbenpumpe nach Anspruch 1 oder 2, dadurch gekennzeichnet, daß bei der hin- und hergehenden Bewegung des Pumpenkolbens (40) sich ein Arbeitsdruckraum (80) der Kolbenpumpe (10, 10a) vergrößert und verkleinert und daß stromabwärts hinter dem Arbeitsdruckraum (80) in Richtung des Auslaßanschlusses (24) ein ausgangsseitiges Rückschlagventil (86) und stromaufwärts vor dem Arbeitsdruckraum (80) für den ersten Einlaßanschluß (21) ein eingangsseitiges erstes Rückschlagventil (81) und für den zweiten Einlaßanschluß (22) ein eingangsseitiges zweites Rückschlagventil (82) vorgesehen sind.

4. Kolbenpumpe nach Anspruch 1 oder 2, dadurch gekennzeichnet, daß der Pumpenkolben (40) den ersten Einlaßanschluß (21) an einer steuerbaren ersten Querschnittsfläche (71) und den zweiten Einlaßanschluß (22) an einer steuerbaren zweiten Querschnittsfläche (72) absperren kann.

5. Kolbenpumpe nach Anspruch 3, dadurch gekennzeichnet, daß der Pumpenkolben (40) den ersten Einlaßanschluß (21) an einer steuerbaren ersten Querschnittsfläche (71) und den zweiten Einlaßanschluß (22) an einer steuerbaren zweiten Querschnittsfläche (72) absperren kann.

6. Kolbenpumpe nach Anspruch 5, dadurch gekennzeichnet, daß mindestens eines der mindestens zwei eingangsseitigen Rückschlagventile (81, 81b, 82, 82b) stromaufwärts vor den steuerbaren Querschnittsflächen (71, 72) vorgesehen ist (Fig. 2, 3).

7. Kolbenpumpe nach Anspruch 5, dadurch gekennzeichnet, daß mindestens eines der mindestens zwei eingangsseitigen Rückschlagventile (81, 81g, 82, 82g) stromabwärts hinter den steuerbaren Querschnittsflächen (71, 72) vorgesehen ist (Fig. 4, 5).

8. Kolbenpumpe nach einem der Ansprüche 3 oder 7, dadurch gekennzeichnet, daß mindestens eines der Rückschlagventile (81, 81g, 82, 82g) im Pumpenkolben (40) vorgesehen ist.

9. Kolbenpumpe nach einem der Ansprüche 3, 7 oder 8, dadurch gekennzeichnet, daß mindestens zwei der Rückschlagventile (81, 81g, 82, 82g) im Pumpenkolben (40) vorgesehen sind, wobei eines der Rückschlagventile (81) einen hülsenartigen Schließkörper (81g) hat und innerhalb dieses Schließkörpers (81g) ein Schließkörper (82g) des weiteren Rückschlagventils (82) vorgesehen ist.

10. Kolbenpumpe, insbesondere für eine schlupfgeregelte Fahrzeugbremsanlage, mit einem in einem Pumpenraum eines Gehäuses über einen Kolbenhub zu einer hin- und hergehenden Bewegung antreibbaren Pumpenkolben, mit mindestens einem in den Pumpenraum führenden Einlaßanschluß (120) sowie mit einem aus dem Pumpenraum führenden ersten Auslaßanschluß (121) und mit mindestens einem aus dem Pumpenraum führenden zweiten Auslaßanschluß (122), dadurch gekennzeichnet, daß in einem Teilbereich des Kolbenhubs des Pumpenkolbens (40) der erste Auslaßanschluß (121) und in einem anderen Teilbereich des Kolbenhubs des Pumpenkolbens (40) der zweite Auslaßanschluß (122) abgesperrt ist (Fig. 6).

11. Kolbenpumpe nach Anspruch 10, dadurch gekennzeichnet, daß über die gesamte Länge des Kolbenhubs jeweils mindestens eines der Auslaßanschlüsse (121, 122) abgesperrt ist.

12. Kolbenpumpe nach Anspruch 10 oder 11, dadurch gekennzeichnet, bei der hin- und hergehenden Bewegung des Pumpenkolbens (40) sich ein Arbeitsdruckraum (80) der Kolbenpumpe (10, 10c) vergrößert und verkleinert und daß stromabwärts hinter dem Arbeitsdruckraum (80) in Richtung des ersten Auslaßanschlusses (121) ein ausgangsseitiges erstes Rückschlagventil (111) und in Richtung des zweiten Auslaßanschlusses (122) ein ausgangsseitiges zweites Rückschlagventil (112) sowie stromaufwärts vor dem Arbeitsdruckraum (80) ein eingangsseitiges Rückschlagventil (110) vorgesehen sind.

13. Kolbenpumpe nach einem der Ansprüche 10 bis 12, dadurch gekennzeichnet, daß der Pumpenkolben (40) den ersten Auslaßanschluß (121) an einer steuerbaren ersten Querschnittsfläche (71) und den zweiten Auslaßanschluß (122) an einer steuerbaren zweiten Querschnittsfläche (72) absperren kann.

14. Kolbenpumpe nach Anspruch 12, dadurch gekennzeichnet, daß mindestens eines der Rückschlagventile im Pumpenkolben (40) vorgesehen ist.

15. Kolbenpumpe nach Anspruch 12, dadurch gekennzeichnet, daß mindestens zwei der Rückschlagventile im Pumpenkolben (40) vorgesehen sind, wobei eines der Rückschlagventile einen hülsenartigen Schließkörper hat und innerhalb dieses Schließkörpers ein Schließkörper des weiteren Rückschlagventils vorgesehen ist.

16. Bremsanlage, dadurch gekennzeichnet, daß eine Kolbenpumpe gemäß einem der Ansprüche 1 bis 15 verwendet wird.
